# EUROPEAN PATENT APPLICATION

(11) **EP 2 605 008 A1**
(43) Date of publication of application: **19.06.2013**
(21) Application number: 12197024.8
(22) Date of filing: 13.12.2012
(51) Int. Cl.: G01N 29/24, B23K 31/12, G01N 21/17, B23K 9/028, B23K 9/32, F16L 13/02

(54) **A method for inspection of a weld and an inspection apparatus for inspection of a weld**

(30) Priority: 15.12.2011 NL 2007972; 15.12.2011 US 201161576079 P
(71) Applicant: Heerema Marine Contractors Nederland B.V., 2332 AA Leiden (NL)
(72) Inventor: Volker, Arno Willem Frederik, 2332 AA Leiden (NL)
(74) Representative: Fluit, Jeroen

(57) **Abstract**

The invention relates to an inspection apparatus (65) for inspection of a weld (55), the apparatus having a first illumination system (67) to provide a first radiation beam (69) to generate an ultrasonic surface displacement in a weld (55). Further the apparatus has a second illumination system (73) to provide a second radiation beam (75) at the weld (55) and a detector (77) for receiving the reflections (79) from the second radiation beam (75) and to detect the ultrasonic surface displacements at the weld (55) caused by the first radiation beam (69) from the reflection (79) of the second radiation beam (75) on the detector (77).

## Description

### Field of the invention

A method of inspecting a weld during welding of two components, the method comprising:
illuminating a first radiation beam to generate an ultrasonic surface displacement; and,
detecting the ultrasonic surface displacements caused by the first radiation beam.

### Background

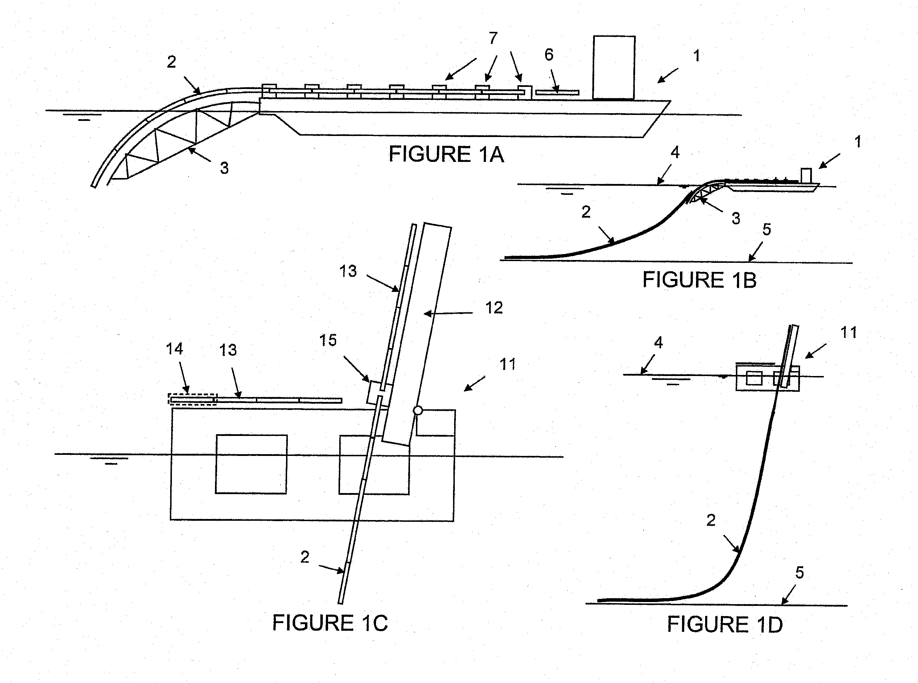

Offshore pipelines may be constructed in several ways. Figure 1A and 1B depict an S-Lay vessel 1 constructing a pipeline 2 using the S-Lay method. In the S-lay method, the pipeline 2 is launched over a stinger 3 and laid in the form of an 'S' between the sea surface 4 and the seabed 5. Line pipe is fabricated in typical joint lengths of 12.2m (40 ft), sometimes 18.3m (60 ft) length. In the S-Lay method single pipe joints 6 are added to the most forward end of the pipeline 2, several work stations 7 performing a part of the pipeline construction process, a few stations completing the weld, one station inspecting the weld and one or two stations completing the field joint coating. As an alternative, in the S-Lay method, multiple joints, for instance double joints may be added to the end of the pipeline 2 instead of the single joint 6, the double joints being constructed-from two single joints, either in a separate construction area on board the S Lay vessel 1 or in a factory onshore.

Figures 1C and 1D depict a J-Lay vessel 11 constructing the pipeline 2 using the J-lay method. The pipeline 2 is laid in the form of a 'J' between the sea surface 4 and the seabed 5. In the J-Lay method multi-joint pipe sections 13 are added to the most upward end of the pipeline 2, the pipeline construction process being typically completed in one or two work stations 15. The multi-joints 13 are constructed from a number of single joints 14, either in a separate construction area on board the J-Lay vessel 11 or in a factory onshore or in a combination of both.

Other pipeline construction processes not shown here are for instance reeling, Q-Lay, C-Lay and installation in the form of towed bundles prefabricated onshore.

All pipeline construction processes have a high number of similar welds to be made either in a more or less horizontal pipe position and/or in a more or less vertical pipe position.

Typical pipeline girth welds, both in S-Lay and in J-Lay and other pipe construction processes, are laid in a 'narrow gap' welding process. These pipelines can generally be indicated as being thick walled, as the wall thickness of the pipelines to be joined typically range between 10 mm and 50 mm.

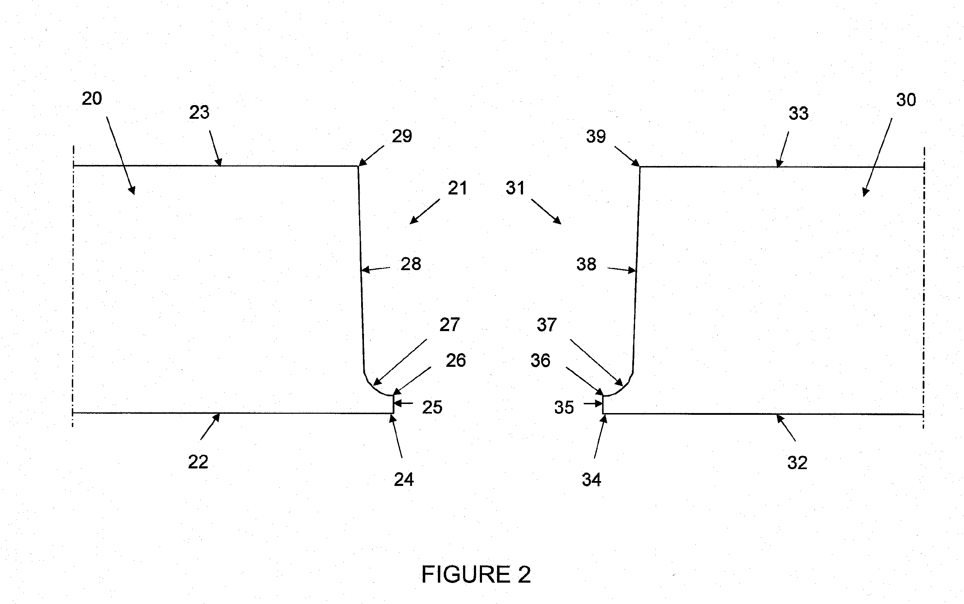

Figure 2 depicts a cross-section over the walls of two joining pipe ends 20 and 30 with typical pipe end bevels 21, 31 which joined together form the narrow gap weld gutter to be filled with weld metal during welding. A typical narrow gap pipe end bevel 21, 31 as applied in the J-Lay process is formed by the following characteristic points and sections:
the transition point 24, 34 between the inner wall of the pipe end 22, 32 and the landing zone 25, 35. Typically, the angle of transition point 24, 34 is approximately 90°.
the landing zone 25, 35, for instance 1 to 2 mm of radial dimension, i.e. thickness in radial direction r, and perpendicular to the axis of the pipe 2, 6, 13, 14.
the transition point 26, 36 between the landing zone 25, 35 and the transition curve 27, 37. Typically, the angle of transition point 26, 36 is approximately 90°.
the transition curve 27, 37 between the transition point 26, 36 and the bevel flank 28, 38. The transition curve for instance has a radius of 2 to 3 mm.
the bevel flank 28, 38, typically at an angle of 85 to 90° with the axis of the pipe 2, 6, 13, 14.
the transition point 29, 39 between the bevel flank 28, 38 and the outer wall of the pipe end 23, 33. Typically, the angle of transition point 29, 39 is 85 to 90°.

Figure 3 depicts an alternative bevel as might be used in the S-Lay process. This bevel shape shows an additional bevel shape 124, 134 between the transition point 24, 34 and the inner pipe wall 22, 32.

Figure 4 depicts a possible build-up of a narrow gap weld. The first pass is the root pass 45, melting the bevel noses 46 and 47 of both pipe end bevels 21 and 31 together under supply of some new weld metal 44. In the root pass 45, a limited amount of new weld metal 44 is deposited, typically about 20% to 40% of the weld deposit of a normal filler pass 48.

The first pass after the root pass 45 is the hot pass 48A. The hot pass 48A takes account of the limited thickness of the root pass 45, so as to avoid burn-through through the root pass 45. In the hot pass 48A, about 30 to 50% of the weld deposit of a normal filler pass 48 is deposited.

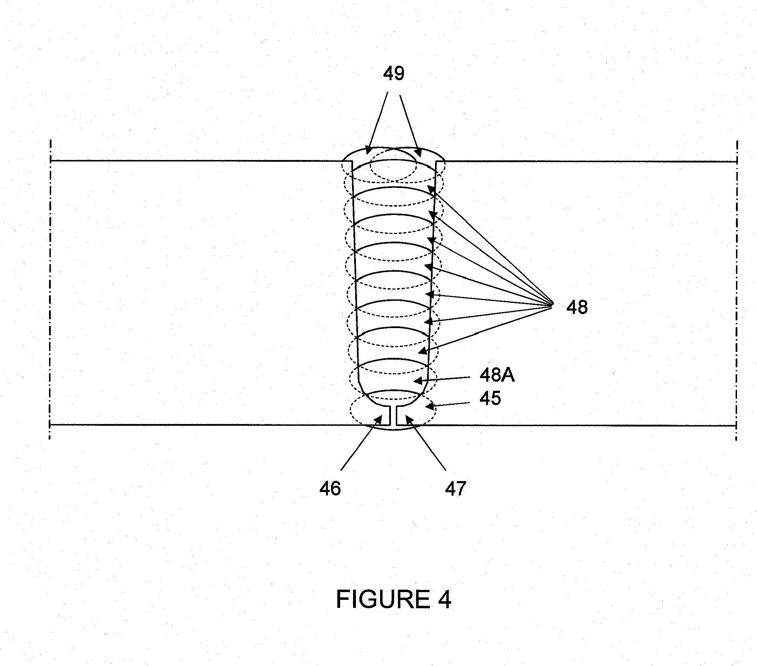

Then the weld gutter 40 is filled with a series of filler passes 48. The thickness of the filler passes 48 is restricted by the stability of the weld pool in the gutter and the maximum heat input the pipe material can sustain before losing its required mechanical properties. In practice, each filler pass 48 is approximately 2-4 mm thick. The weld is finished with one or more cap passes 49, in Figure 4 two cap passes are shown.

In this document, "the weld" is considered to be the volume of the pipe ends including the bevel and weld gutter in which the pipe and weld material reach a molten state during welding. When mentioning aiming a beam onto the weld, for the root, hotpass and filler layers in practice this means the area between the points 29 and 39 indicated in figure 2. For the last passes, especially the cap passes 49, this area can be wider as during the last passes the pipe material can be expected to melt beyond the points 29, 39 over the outer surface of the pipe.

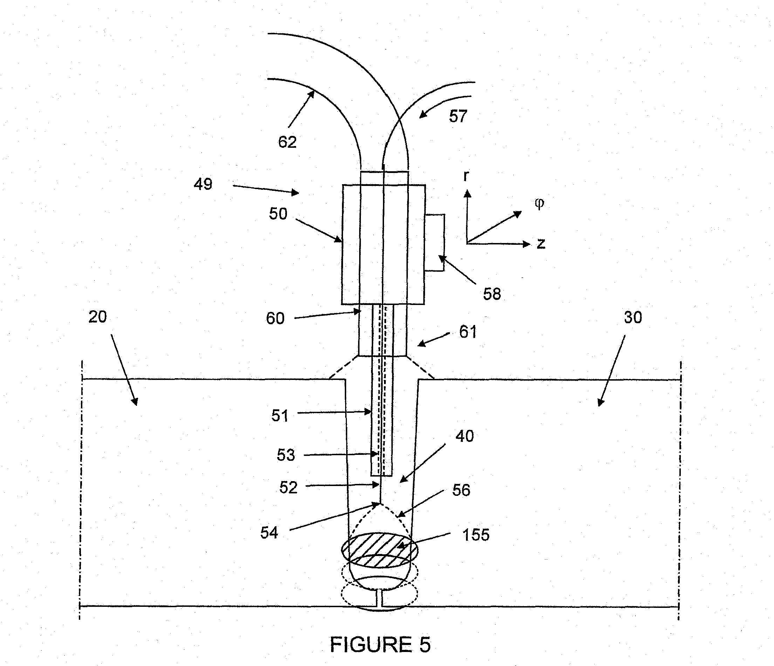

In practice the shape of the weld gutter is not perfect. For instance, Figure 5 depicts that the shape of the weld gutter 40 is not ideal and symmetrical. Hi-lo misalignment may occur at the transition points 24, 34 between inner wall 22, 32 and landing zone 25, 35; at transition points 26, 36 between landing zone 25, 35 and weld gutter 40; and at transition points 29, 39 between bevel flanks 28, 38 and outer wall 23, 33. Moreover, the bevel flanks may not be perfectly symmetrical.

These geometrical imperfections may for instance be caused by diameter differences between pipe ends 20, 30, wall thickness differences between pipe ends 20, 30, out-of-roundness of the pipe ends 20, 30, wall thickness variations over the circumference of pipe ends 20, 30, and/or beveling inaccuracies

These geometrical imperfections may vary over the circumference of the pipe. As a result the shape and the volume of the weld gutter 40 vary over the circumference of the pipe as a function of cp. Also, the radial dimension of the contact area between the two pipe ends, in particular between the landing zones 25 and 35, that is the overlapping area of landing zones 25, 35, may vary in dependence of the circumference of the pipe as a function of *cp*.

The root pass 45 may be manually welded, whereby the welder seeks continuously a compromise between proper penetration of the root pass 45 through the bevel noses 46, 47, proper fusion of the bevel noses 46, 47 into the weld pool, avoidance of burning through the thin places where the contact area between landing zones 25, 35 is small, i.e. the radial dimension is small, and limiting the heat input in order to end up with mechanical properties as required.

A disadvantage of the process is that the geometrical imperfections demand a high level of welder experience; prohibits automation of the pipeline welding process; and run a considerable risk of burn-through at thin places.

The hot pass 48A is laid more or less as the root pass 45, the welder seeking a continuous compromise between proper fusion of the bevel flanks 28, 38 into the weld pool; avoidance of burning through the thin places of the root pas 45; and limiting the heat input in order to end up with mechanical properties as required.

The filler passes 48 do no longer bear the risk of burn-through. During welding of the filler passes, the welder seeks a continuous compromise between proper fusion of the bevel flanks 28, 38 into the weld pool; and limiting the heat input in order to end up with mechanical properties as required. Variations in shape and volume of the weld gutter 40 over the circumference are compensated for in the last filler passes or in the cap pass(es), sometimes requiring either extra passes to be made with extra starts and stops inducing extra risk of faults or such high deposit rates that the related heat input endangers the mechanical properties as required.

Another consequence of extra starts and stops may be that prior to welding the cap pass(es) excess weld metal must be removed by grinding. This is a labor and time intensive activity and is another source of welding faults.

The weld produced may contain defects. If defects are too big, they have to be either repaired or the weld has to be completely cut out and made again. The invention relates to a method and system to detect various types of defects, such as:
Lack of penetration: the weld bead does not penetrate the base or pipe materials sufficiently so that both sides of the joint are un-fused.
Lack of fusion: defects that occur when there is no fusion between the weld metal and the sidewall of the joint.
Cold lap: Cold lap is a lack of fusion between the weld passes, generally runs parallel to the surface of the parent plate.
Porosity: is the presence of cavities or gas pores in the solidified weld bead.
Crack: local discontinuity produced by a fracture which may occur during solidification or cooling

US 5,585,921 discloses a laser ultrasonic inspection system for inline inspection of a a first workpiece which is welded to a second workpiece. An array of acoustic waves is generated in a first workpiece that is being welded to a second workpiece. The acoustic waves arrive at the weld site in phase with respect to each other and, if the weld has not yet been formed, are reflected form the interface between the two workpieces and illuminate the outer surface of the first workpiece. As the weld forms, an increasing portion of the acoustic waves is transmitted to the second workpiece, where they illuminate its outer surface.

### Summary

It is an object of the invention to provided an improved method for inspection of a weld.

Accordingly there is provided a method of inspecting a weld during welding of two components, the method comprising:
illuminating a first radiation beam onto the weld to generate an ultrasonic surface displacement in the weld;
illuminating a second radiation beam onto the weld;
receiving the reflections from the second radiation beam onto a detector; and,
detecting the ultrasonic surface displacements at the weld caused by the first radiation beam from the reflection of the second radiation beam on the detector.

An advantage of aiming the first and second radiation beam in the weld is that the ultrasonic displacement is introduced closer to a possible defect in the weld, which gives a shorter travel path of the ultrasonic displacement through the weld. The spreading of the ultrasonic displacement while travelling through the weld may be less which may improve the resolution. Further if one of the first and second radiation beam is aimed at the outside of the pipe the ultra sonic wave may need to travel the whole bevel which may be too long so that no signal is left.

The first radiation beam may comprises multiple first radiation sub-beams and/or the second radiation beam may comprise multiple second radiation sub-beams.

The method comprises illuminating the second radiation beam on substantially the same location as the location of the first radiation beam on the weld and detecting an ultrasonic pulse echo reflection from the first beam with the second radiation beam for pulse-echo inspection.

The method comprises illuminating the second radiation beam on a different location on the weld than the location of the first radiation beam on the weld and detecting an ultra sonic displacement with the second radiation beam for time of flight diffraction inspection.

The first radiation beam may provide a spot with a spot size larger then 150 micrometer, preferably larger than 300 micrometer on the weld. This results in a compressional wave in the material and an undesired surface wave e.g. Rayleigh wave. The primary interest is measuring the compressional waves traveling into the weld. The detector may have difficulties distinguishing between the Rayleigh waves and the compressional waves. By having the spot size e.g. at a diameter of 150 micrometer or more the Rayleigh waves which travel along the surface are suppressed because multiple (Rayleigh) wavelengths will fit into the spot size causing destructive interference.

The method comprises shifting the first or second radiation beam to a different location on the weld to change from pulse echo detection inspection to time of flight diffraction inspection or vice versa. The shifting may occur over a distance between 1 and 20 millimeter (mm), preferably between 2 and 10 mm, and most preferably around 5 mm on the weld. The same apparatus may be used for both pulse echo detection inspection and time of flight diffraction inspection without additional illumination systems and detectors.

The first radiation beam may be pulsed with a pulse duration between 1 femtosecond and 50 nanoseconds, preferably between 1 nanosecond and 20 nanoseconds, and more preferably around 6 nanoseconds. The wavelength may be between 400 and 1200 nanometer (nm), preferably 532 nm. The pulse energy may be between 1 and 1000 millijoule preferably about 50 milliJoule. The dead time between the pulses may be between 50 nanoseconds and 1000 nanoseconds preferably about 200 nanoseconds.

The second radiation beam may be continuous. The wavelength may be between 400 and 1200 nm, preferably 1064 nm.

The method may comprise:
moving a welding torch over an area between the two components;
welding the two components together by providing a weld in between the two components; and,
inspecting the weld by providing the first and second radiation beam on the weld.

Multiple weld layers may be welded on top of each other between the components and each weld layer may be inspected. Alternatively at least each second weld layer may be inspected in this way the inspection may be faster since not every weld layer is inspected. The welding parameters may be adjusted as a function of the detected ultrasonic displacement at the weld. The welding parameters include one or more from the group of welding torch forward speed, voltage, amperage, position of the welding torch relative to the components, speed of oscillation of the welding torch, amplitude of oscillation of the welding torch.

Adjusting the welding parameters may include aborting the weld process in case an unacceptable defect is detected.

According to a further embodiment there is provided an inspection apparatus for inspection of a weld, the apparatus comprising:
a first illumination system to provide a first radiation beam to generate an ultrasonic surface displacement in a weld;
a second illumination system to provide a second radiation beam at the weld; and,
a detector for receiving the reflections from the second radiation beam and to detect the ultrasonic surface displacement at the weld, wherein the first and second illumination system provides the first and second radiation beam at the weld so as to detect the ultrasonic surface displacement of the material of the weld.

The inspection apparatus may be constructed and arranged to provide the first and second beam on substantially the same location for pulse echo inspection and on a different location for time of flight diffraction inspection.

The apparatus may be provided with a beam shift mechanism for shifting the location of the first or second radiation beam on the weld to change from pulse echo detection inspection to time of flight diffraction inspection or vice versa.

The second illumination system may provide a second radiation beam with a smaller spot size than the spot size of the first radiation beam provided by the first illumination system. The second illumination system may provide the second radiation beam with a round spot. The first illumination system may provide the first radiation beam with a spot with an elongated shape.

According to a further embodiment there is provided a welding apparatus for welding two components comprising:
a welding torch,
a first actuator for moving the welding torch and/or the pipeline components with respect to each other so as to allow the welding torch to form a weld in between the components; wherein the welding apparatus is provided with the inspection apparatus for inspecting the weld in between the components.

The inspection apparatus may be constructed and arranged within the welding apparatus to inspect a previous welding layer when the temperature of this layer is cooled to between 100 and 500 degrees Celsius (C), preferably around 300 degrees C. This assures that the throughput is high enough because there is no need to wait until the weld is completely cooled down.

According to yet a further embodiment the invention relates to a pipeline obtained by a method of moving a welding torch between two pipe line sections;
welding the two pipeline sections together by providing a weld in between the two pipe line sections;
illuminating a first radiation beam onto the weld to generate an ultrasonic surface displacement;
illuminating a second radiation beam onto the weld;
wherein the first and second radiation beams are aimed onto the weld;
receiving the reflections from the second radiation beam onto a detector; and,
detecting the ultrasonic surface displacements at the weld caused by the first radiation beam from the reflection of the second radiation beam on the detector. These and other aspects, features and advantages will become apparent to those of ordinary skill in the art from reading the following detailed description and the appended claims. For the avoidance of doubt, any feature of one aspect of the present invention may be utilised in any other aspect of the invention. It is noted that the examples given in the description below are intended to clarify the invention and are not intended to limit the invention to those examples per se. Similarly, all percentages are weight/weight percentages unless otherwise indicated. Numerical ranges expressed in the format "from x to y" are understood to include x and y. When for a specific feature multiple preferred ranges are described in the format "from x to y", it is understood that all ranges combining the different endpoints are also contemplated.

### Brief description of the figures

Embodiments of the invention will be described, by way of example only, with reference to the accompanying schematic drawings in which corresponding reference symbols indicate corresponding parts, and in which:
Figures 1A and 1B depict a S-lay vessel for laying pipes;
Figures 1C and 1D depicts a J-lay vessel for laying pipes;
Figure 2 depicts an embodiment of two pipe end bevels for instance suitable for a J-lay process;

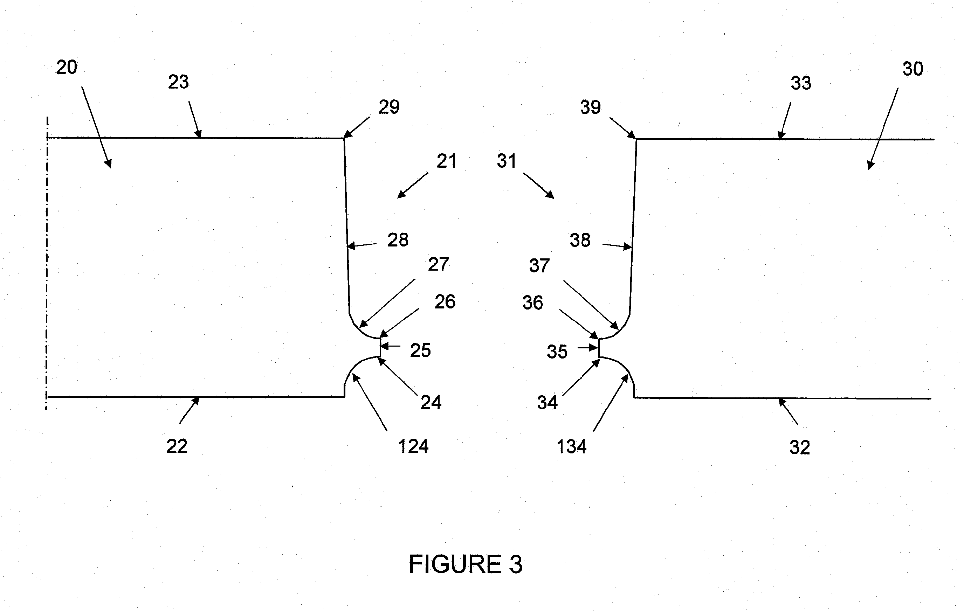

Figure 3 depicts an embodiment of two pipe end bevels for instance suitable for a S-lay process;
Figure 4 depicts the build up of a narrow gap weld;
Figure 5 depicts welding two components together with a welding apparatus;

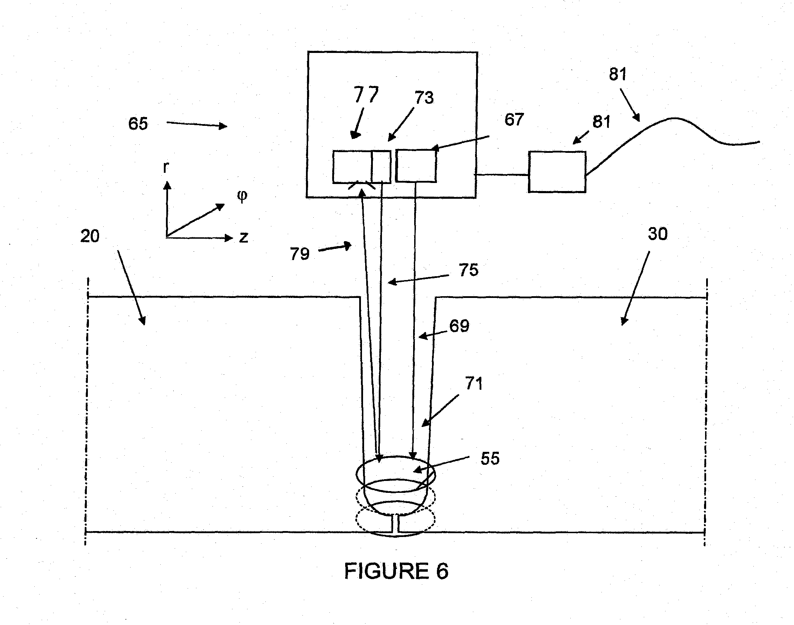

Figure 6 depicts an inspection apparatus for inspection of a weld;

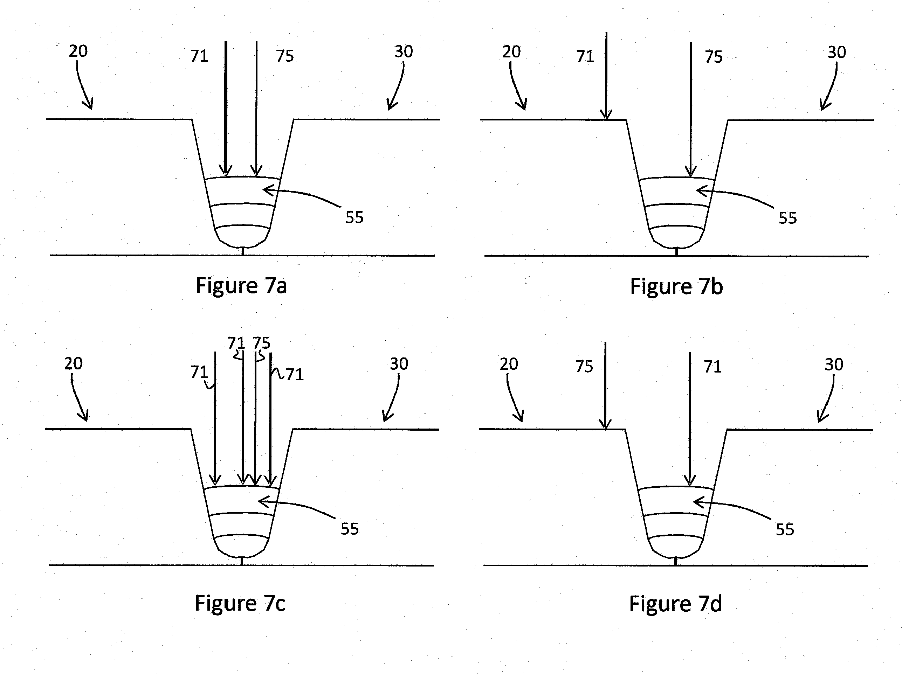

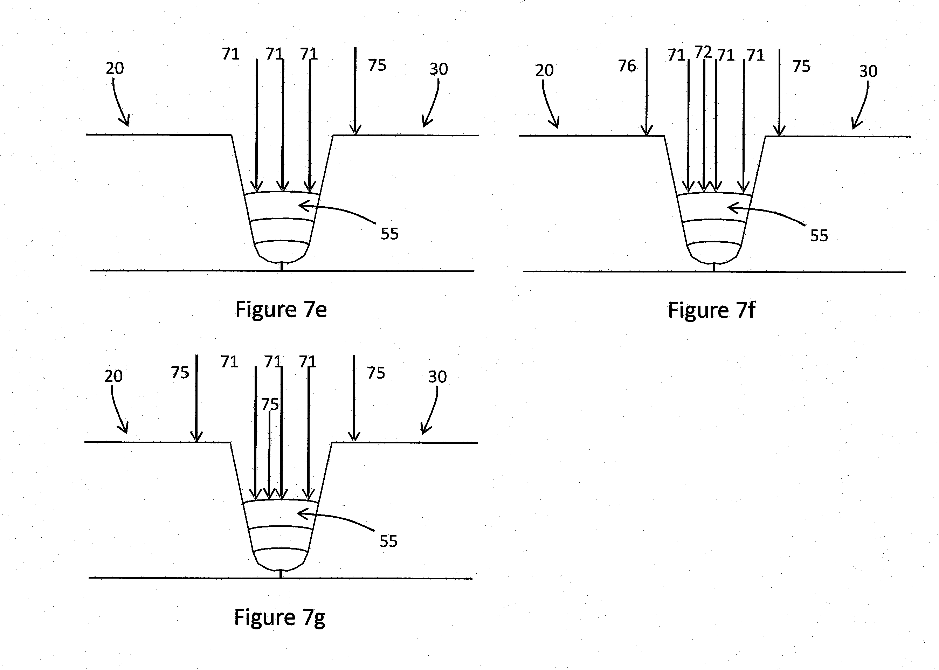

Figure 7 depicts schematic representations of various embodiments of the invention,

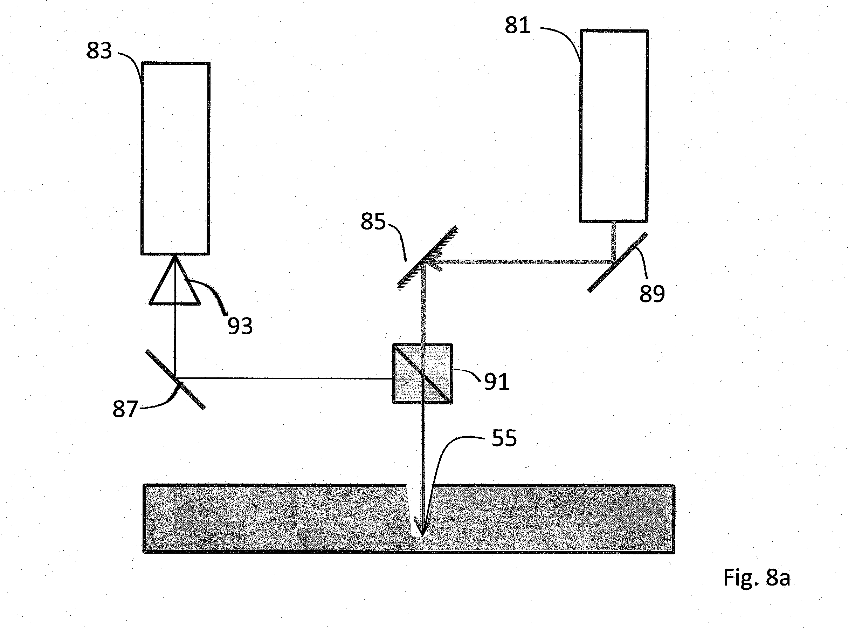

Figure 8a depicts an inspection apparatus for inspection of a weld configured for pulse echo detection; and,

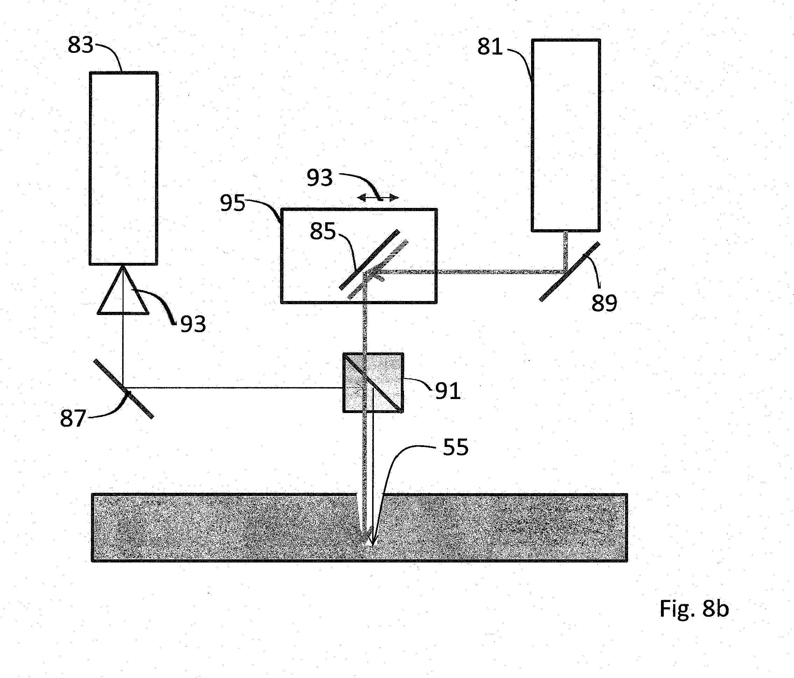

Figure 8b depicts the inspection apparatus of figure 8a configured for time of flight inspection.

### Detailed description

Figure 5 depicts welding two components, for example two pipe sections 20, 30 together with welding apparatus 49. In a previous step the walls of the joining pipe sections 20 and 30 may be accurately lined up and engaged, both pipe end bevels 21 and 31 may form a narrow gap weld gutter 40. The welding tip 51, for example a coated copper alloy tip, of a welding torch 50 is brought into the narrow gap weld gutter 40. Any other suitable welding tip for the welding torch 50 may be used. The welding wire 52 may be guided through a central opening 53 in the welding tip 51. An electric potential difference may be generated between the wire tip 54 and the weld pool 155, creating an electric arc 56. The electric arc 56 may continuously melt off drops of metal from the wire tip 54 depositing the metal into the weld pool 155 as the wire is fed in the direction 57 and the first actuator 58 moves the welding torch forward in circumferential direction ϕ around the pipe sections trough the weld gutter 40 so as to allow the welding torch to form a weld in between the components by
- moving the welding torch 50 forward in circumferential direction ϕ.
- moving the welding torch 50 in radial direction r in order to control the distance between the wire tip 54 and the weld pool 155.
- moving the welding torch 50 in axial direction z in order to control the position of the wire tip 54 in relation to the geometry of the weld gutter 40. Where the weld gutter 40 is too wide relative to the width of the electric arc 56, proper side wall fusion may be difficult; in that situation, the welding torch manipulator 58 may oscillate the welding torch in z direction between boundaries as dictated by the width of the weld gutter 40 at a frequency f as dictated by the tip travel speed v, in order to ensure proper side wall fusion.

A shielding gas outlet 60 in the welding torch 50 may cast a shielding gas 61 over the weld pool 155 in order to prevent oxidation of the fluid weld metal. The gas outlet 60 is movable with respect to the torch 50 in order to keep the outlet opening always close to the outer surface of the pipe for limiting gas losses when blowing gas into the weld gutter 40. The shielding gas may be supplied to the welding torch 50 via a shielding gas hose 62.

After moving the welding torch 50 away an inspection apparatus 65 for inspection of the weld may be provided (see figure 6). The apparatus may inspect the layer of the weld 55 that was just welded and/or any previous layers. The inspection apparatus 65 may be provided as a part of the welding apparatus 49 or as a separate inspection apparatus 65.

The inspection apparatus may be positioned behind the welding apparatus to inspect the last layer as soon as it cooled down sufficiently. The weld 55 may preferably be inspected when it has a temperature between 100 to 500 degrees C, preferably around 300 degrees C. This way defects may be noticed as soon as possible after the layer is applied and welding may be stopped if required. This may minimize the time lost as well as the additional work to be performed.

The inspection apparatus may be mounted just before the welding torch to inspect a layer just before the next layer may be applied. This means that inspection may be done a little later than in the previous example, but it may give the weld sufficient time to cool down, and provide the opportunity to do some work on the weld surface, like cleaning or grinding, if appropriate.

The inspection apparatus 65 may have a first illumination system 67 to provide a first radiation beam 69 to generate an ultrasonic surface displacement in a target 71 in the weld 55. The frequency of the ultrasonic displacement may be between 2 to 10 MHz but also other frequencies may be used. The inspection may be manual or automated and is an essential part of modern manufacturing processes.The first illumination system may provide a short pulsed radiation beam with a pulse duration between 1 femtosecond and 50 nanoseconds for example with a laser system. A second illumination system 73 may be provided to the inspection apparatus 65 to provide a second radiation beam 75 at or near the target 71 in the weld 55. The second illumination system may comprise a laser system or a light emitting diode to provide the second radiation beam. The inspection apparatus may be provided with a detector 77 for receiving the reflections 79 from the second radiation beam 75 of the target 71 in the weld 55 and to detect the ultrasonic surface displacement at or near the target 71 in the weld. The detector 77 may comprise a photo detector to detect the ultrasonic surface displacement at or near the target as a displacement of the reflection of the second radiation beam over the surface of the photo detector. By creating an ultrasonic displacement in the weld with a radiation pulse and by detecting a response in the weld with the second illumination system the detector irregularities in the weld can be detected.

The first illumination system may provide the first radiation beam with a spot with an elongated shape. The second illumination system may provide the second radiation beam with a round spot. The second illumination system may provide a second radiation beam with a smaller spot size than the spot size of the first radiation beam provided by the first illumination system.

An advantage of directing the first and second radiation beam at or near the target in the weld is that the ultrasonic displacement is introduced closer to a possible defect in the weld, which gives a shorter travel path of the ultrasonic displacement through the weld. The spreading of the ultrasonic displacement while travelling through the weld will be less and therefore higher frequencies may be used which result in a better resolution at the detector. The travel time through thick walled material such as the pipe sections 20, 30 may be very long such that it will be difficult to get a reliable measurement.

In the case of an offshore riser system, defects with a size of less than 1 mm, in particular between 0,3 and 0,5 mm may need to be detected. The required resolution to find this size of defects is not possible when the displacements have to travel through the thickness of the pipe material,

The welding torch 50 and the inspection apparatus 65 may be attached to each other and the first actuator for moving the welding torch 50 may also move the inspection apparatus 65 with respect to the components. The welding apparatus 49 may comprise a second actuator for moving the inspection apparatus and the components with respect to each other so as to allow the inspection apparatus to inspect the weld in between the components. The inspection apparatus may be operable connected to a welding controller 81 controlling the welding apparatus. The welding controller may be operable connected to the welding torch 50 and the first actuator via a connection 83 so as to control the position of the welding torch with respect to the components by providing an actuation signal to said first actuator and/or to provide one or more control signals for setting controllable welding parameters of said welding torch 50. The welding apparatus may provide multiple welding layers between the components and the inspection apparatus 65 may be constructed and arranged to inspect a previous layer while the welding torch 50 is welding a subsequent layer. The welding controller may be controlling the welding torch and the position of the welding torch to control the welding of the subsequent layer on the basis of the inspection results of the previous layer. In general welding may take multiple passes of the welding torch 50 and by inspecting the weld layer after layer defects may be observed in an early stage. The welding process may be adjusted such that the complete weld may stay within specification. This saves time and effort when compared to first completing the weld and then noticing that it is out of specifications subsequently removing the weld and start the welding all over again.

Figure 7 shows various embodiments of the current invention, through which a weld 55, or at least a layer thereof, connecting two components 20, 30 may be inspected.

Figure 7a shows an embodiment wherein both the first radiation beam 71 and the second radiation beam 75 may have a target within the weld. Due to the short travel distance between the target and the weld this embodiment may be particularly suitable to detect small defects within the weld.

Figure 7b shows an embodiment where the first radiation beam has its target outside the weld and the second radiation beam has its target within the weld. Figure 7d shows a similar embodiment but then the other way around. In this embodiment, also second radiation beams at each side of the weld is a possibility. Although the distance between one of the beams and the test location is increased, this embodiment may be chosen when detection of defects between the weld and the pipe wall is important.

Figure 7c shows an embodiment where multiple first radiation sub-beams 71 are used. This may be required to provide an accurate image of all areas of the weld. The same can be achieved by using a single first radiation beam that can be moved across the weld surface, for instance using a scanning device using a mirror. Different methods are possible as well.

Figure 7e is similar to 7c, with the difference that the second radiation beam is aimed at the side of the weld, again this can be beneficial when defects between the weld and the component are investigated. An embodiment with second radiation beams at either side of the weld is possible as well. Figure 7g shows yet another embodiment where second radiation beams are positioned both inside the weld and on both sides outside the weld to obtain a very accurate image of both the weld body and the transition between the weld and the component.

Figure 7f shows a further embodiment in which multiple first radiation sub beams may be provided. More specifically, this figure shows an embodiment where multiple inspection techniques may be used on a single weld. For instance the first radiation beams 71 may be provided for a pulse echo inspection method. A further first radiation beam 72 may be provided for a TOFD (Time of Flight Diffraction) inspection method.

Second radiation beams 75, 76 may be provided and connected to detectors (not shown) to detect the surface displacements belonging to each inspection method. In this figure the second radiation beams are shown on the side of the weld for clarity purposes, but these may be aimed on the weld as well.

In this configuration a more versatile system may be obtained, as various inspection methods may be more suitable to detect various types of defects. As an example, the pulse echo inspection method may be especially suitable to detect porosity, cold lap and lack of fusion defects, and the TOFD inspection method may be more suitable to detect lack of penetration and crack defects.

Figure 8a depicts an inspection apparatus for inspection of a weld. The apparatus comprises: a first illumination system e.g. laser 81 to provide a first radiation beam to generate an ultrasonic surface displacement in a weld 55, a second illumination system e.g. laser 83 to provide a second radiation beam at the weld 55; and, a detector 93 for receiving the reflections from the second radiation beam and to detect the ultrasonic surface displacement at the weld 55.

The first radiation beam may have multiple first radiation sub-beams or the second radiation beam may have multiple second radiation sub-beams.

The apparatus may be provided with a recombination optics e.g. beam splitter 91 to combine the first radiation beam with the second radiation beam.

The apparatus may be provided with mirrors 89, 85, which direct the first radiation beam to weld 55.

The apparatus of figure 8a is configured for pulse echo measurement. The first and second radiation beam are directed at the same location in the weld 55 so that with the second radiation beam the response may be measured of the pulse generated with the first radiation beam for pulse echo measurement.

The laser 81 may have a wavelength between 400 and 1200 nm, preferably 532 nm. The laser may be pulsed for example with a pulse duration between 1 femtosecond and 50 nanoseconds, preferably 1 nanosecond and 20 nanoseconds, and more preferably 6 nanoseconds with a pulse energy of between 1 and 1000 millijoule preferably about 50 millijoule.

The spot of the first radiation beam on the weld may be circular with a diameter of 300 micrometer. With this spot size the Rayleigh waves which may have a wavelength of 150 micrometer and are considered as noise when pulse echo location is done and may be substantially suppressed.

The laser energy may cause some weld material to evaporate causing an acoustic (compression) wave in the ablative regime through the weld material. The dead time between the pulses may be between 50 nanoseconds and 1000 nanoseconds preferably about 200 nanoseconds.

The acoustic (compression) wave in the weld material may have a centre frequency in the MHz. range, for example 20 MHz The acoustic waves in the weld material may have a wavelength in the order of 300 micrometer an may travel at a speed of 600 meter per second.

The acoustic (compression) wave may travel through the weld and be reflected by irregularities in the weld. The reflected acoustic (compression) wave may cause an ultrasonic surface displacement at the surface of the weld 55 which may be detected by using the (detection) laser 83 directing the second radiation beam at the weld and a detector 93 to measure an interference created between the original second radiation beam and the beam reflected from the weld 55.

For example with a two wave mixing interferometer or a Fabry-Pèrot interferometer set up the compression wave may be detected.

The detection laser 83 may be a continuous laser with an energy level up to 500 W, such that the reflected light is in the milliwatt range e.g. between 0,5 and 10 and the second radiation beam may have a wavelength around 1064 nm. The same detection laser 83 and interferometer set up may be used for time of flight and for pulse echo detection saving cost and space.

With pulse echo detection the detection laser 83 will be directed at the same location as the excitation beam is directed. Any defect such as a porosity, cold lap or lack of fusion in the weld may be detected if the compression wave is reflected back towards the surface of the weld and detected by the detection laser 83 and the detector 93.

One excitation laser 81 may be used for providing the first radiation beam for the pulse echo location and for the TOFD inspection method. In this way only one excitation laser 81 may be needed saving cost and space in the apparatus. Figure 8b depicts the inspection apparatus for inspection of a weld of figure 8a adapted for the time of flight (TOFD) inspection method.

With time of flight detection the detection laser will be aimed a little distance away from the location where the excitation laser beam is hitting the weld. The little distance may be between 1 and 20 mm, preferably between 2 and 10 mm, and most preferably around 5 mm.

The inspection apparatus is provided with a beam shift mechanism 95 to shift the beam in a direction as depicted by the arrow 93. The beam shift mechanism may be shifting the mirror 85 in a direction as depicted by the arrow 93 to shift the beam of the first radiation system e.g. excitation laser 81 away form the location where the second radiation system e.g. detection laser 83 is aimed.

For example, the excitation beam may be aimed at an location 5 millimetres away from the location where the detection laser may be aimed at the weld. The distance between the location where the first radiation beam of the excitation laser is aimed and the location where the second radiation beam of the detection laser is aimed may be used to differentiate between different waves that pass the second radiation beam.

For example the pressure waves may travel with 6000 meter per second while the Rayleigh waves travel with 3000 meter per second. The pressure waves may be detected first while the Rayleigh waves are detected secondly or may be ignored. Lack of penetration and crack defects in the weld between the location where the excitation laser is aimed and the location where the detection laser is aimed may be detected in this way from the pressure waves.

The detection of the Rayleigh waves may yield information of the temperature in the weld. The spot size of the first radiation beam may be reduced to improve the Rayleigh waves. For example the spotsize of the first radiation beam may be smaller than 150 micrometer, for example 75 micrometer to improve the Rayleigh waves. The second radiation beam may the same as in the TOFD application to measure the Rayleigh waves.

It is also possible to shift the detection laser beam instead of shifting the excitation laser beam. It is however advantageous to shift the excitation laser beam with respect to the detection beam because the location of the detection beam may be connected with the position of the detector 93 as well.

Time of flight detection and pulse echo detection may be used simultaneously. The detection laser beam may be splitted for this purpose. The detector may be doubled for this purpose as well.

The excitation laser 81 may also be adjusted to lower energy levels for the time of flight detection. For example the first radiation beam may have a pulse energy of 5 millijoule for a pulse of 6 nanoseconds and may be used to create a pulse in a thermo elastic regime in the weld. An advantage is that substantially no weld material may be evaporated at this lower energy levels. Another advantage may be that the directivity of emitted compression waves changes, with more emphasis on high angles relative to the surface normal at this lower energy level. This is favourable for time of flight detection.

The first illumination system (e.g. excitation laser 81) may have an adjustable energy level to accommodate both the first radiation beam with pulses of 5 and 50 millijoule. The pulses of 50 millijoule to create ablative excitation of the weld for pulse-echo detection and the pulses of 5 millijoule to create thermo-elestic excitation of the weld for time of detection.

The welding and the inspection apparatus may be provided to a pipelay vessel and used to lay a pipeline on the ocean floor.

In this document, "the weld" is considered to be the volume of the pipe ends including the bevel and weld gutter in which the pipe and weld material reach a molten state during welding. For the root, hotpass and filler layers in practice this means the area between the bevel. For the last passes, especially the cap passes, this area can be wider as during the last passes the pipe material can be expected to melt partially also over the outer surface of the pipe.

While specific embodiments of the invention have been described above, it will be appreciated that the invention may be practiced otherwise than as described. It is to be understood that the disclosed embodiments are merely exemplary of the invention, which can be embodied in various forms. Embodiments may be further described by the following numbered clauses:
1. An inspection apparatus for inspection of a weld, the apparatus comprising:
   a first illumination system to provide at least one first radiation beam to generate an ultrasonic surface displacement in a target;
   a second illumination system to provide at least one second radiation beam at or near the target; and,
   a detector for receiving the reflections from the second radiation beam and to detect the ultrasonic surface displacement at or near the target, wherein at least one of the first and second illumination system provides the first and/or second radiation beam at or near the weld so as to detect the ultrasonic surface displacement of the material of the weld.
2. The inspection apparatus according to clause 1, wherein the first illumination system provides multiple first radiation beams.
3. The inspection apparatus according to any of the preceding clauses, wherein the first illumination system provides one or more radiation beams for pulse-echo inspection.
4. The inspection apparatus according to any of the preceding clauses, wherein the first illumination system provides one or more first radiation beams for time of flight diffraction inspection.
5. The inspection apparatus according to any of the preceding clauses, wherein the first illumination system provides two or more radiation beams for a combination of inspection methods.
6. The inspection apparatus according to any of clauses 3 to 5, wherein the first illumination system provides two or more first radiation beams for pulse echo and time of flight diffraction inspection.
7. The inspection apparatus according to any of the preceding clauses, wherein the second illumination system provides multiple second radiation beams.
8. The inspection apparatus according to any of the preceding clauses, wherein the detector comprises a first detector constructed and arranged for receiving reflections to be used for pulse echo inspection and a second detector constructed and arranged for receiving reflections for time of flight diffraction inspection.
9. The inspection apparatus according to clause 1, wherein the first illumination system provides a short pulsed beam with a pulse duration between 1 femtosecond and 50 nanoseconds.
10. The inspection apparatus according to any of the preceding clauses, wherein the detector comprises a photo detector to detect the ultrasonic surface displacement at or near the target as a displacement of the reflection of the second radiation beam over the surface of the photo detector.
11. The inspection apparatus according to clause 1, wherein the second illumination system provides a second radiation beam with a smaller spot size than the spot size of the first radiation beam provided by the first illumination system.
12. The inspection apparatus according to any of the preceding clauses, wherein the second illumination system provides the second radiation beam with a round spot.
13. The inspection apparatus according to any of the preceding clauses, wherein the first illumination system provides the first radiation beam with a spot with an elongated shape.
14. A welding apparatus for welding two components comprising:
   - at least one welding torch,
   - a first actuator for moving the welding torch and/or the components with respect to each other so as to allow the welding torch to form a weld in between the components; wherein the welding apparatus is provided with the inspection apparatus according to clause 1 for inspecting the weld in between the components.
15. The welding apparatus according to clause 14, wherein the inspection apparatus is constructed and arranged within the welding apparatus to inspect a previous welding layer before the welding torch applies a subsequent welding layer.
16. The welding apparatus according to clause 14 or 15, wherein the inspection apparatus is constructed and arranged within the welding apparatus to inspect a previous welding layer when the temperature of this layer is cooled to between 100 and 500 degrees C, preferably around 300 degrees C.
17. The welding apparatus according to any of clauses 14 to 16, wherein the welding apparatus is provided with a second actuator for moving the inspection apparatus and the components with respect to each other so as to allow the inspection apparatus to inspect the weld in between the components.
18. The welding apparatus according to any of clauses 14 to 17, wherein the welding torch and the inspection apparatus are attached to each other and the first actuator for moving the welding torch also moves the inspection apparatus with respect to the components.
19. The welding apparatus according to any of clauses 14 to 18, wherein the inspection apparatus is operable connected to a welding controller controlling the welding apparatus.
20. The welding apparatus according to clause 19, wherein the welding controller is operable connected to the welding torch and the first actuator so as to control the position of the welding torch with respect to the components by providing an actuation signal to said first actuator and/or to provide one or more control signals for setting controllable welding parameters of said welding torch.
21. The welding apparatus according to clause 20, wherein the welding apparatus is constructed and arranged to provide multiple welding layers between the components and the inspection apparatus is constructed and arranged to inspect a previous layer while the welding torch is welding a subsequent layer.
22. The welding apparatus according to clause 21, wherein the controller is controlling the welding torch and the position of the welding torch to control the welding of the subsequent layer on the basis of the inspection results of the previous layer.
23. A pipelay vessel comprising the inspection apparatus according to any one of clauses 1 to 13.
24. A pipelay vessel comprising the welding apparatus according to any one of clauses 14 to 22.
25. A method of inspecting a weld during welding of two components, the method comprising:
   illuminating at least one first radiation beam onto the weld or onto one of the components adjacent the weld to generate an ultrasonic surface displacement in the weld;
   illuminating at least one second radiation beam onto the weld or onto one of the components adjacent the weld;
   wherein at least one of the at least one first or second radiation beam is aimed onto the weld;
   receiving the reflections from the at least one second radiation beam onto a detector; and,
   detecting the ultrasonic surface displacements at the weld from the reflection.
26. The method according to clause 25, wherein the first radiation beam comprise multiple first radiation beams.
27. The method according to clauses 25 or 26, wherein the first radiation beam comprises one or more first radiation beams for pulse-echo inspection.
28. The method according to any of clauses 25 to 27, wherein the first radiation beam comprises one or more first radiation beams for time of flight diffraction inspection.
29. The method according to any of clauses 25 to 28, wherein the first radiation beam provides two or more radiation beams for a combination of inspection methods.
30. The method according to any of clauses 25 to 29, wherein the first radiation beam provides two or more first radiation beams for pulse echo and time of flight diffraction inspection.
31. The method according to any of clauses 25 to 30, wherein the second radiation beam comprises multiple second radiation beams.
32. The method according to clause 25, wherein the method comprises
   moving at least one welding torch between the two components;
   welding the two components together by providing a weld in between the two components; and,
   adjusting the welding parameters as a function of the detected ultrasonic displacement at the weld.
33. The method according to clause 32, wherein said welding parameters include one or more from the group of welding torch forward speed, voltage, amperage, position of the welding torch relative to the components, speed of oscillation of the welding torch, amplitude of oscillation of the welding torch.
34. The method according to clause 32, wherein adjusting the welding parameters includes aborting the weld process in case an unacceptable defect is detected.
35. The method according to any one of clauses 25 to 34, wherein the components are pipe line sections.
36. A pipeline obtained by a method of moving a welding torch between two pipe line sections;
   welding the two pipeline sections together by providing a weld in between the two pipe line sections;
   illuminating at least one first radiation beam onto the weld or onto one of the components adjacent the weld to generate an ultrasonic surface displacement;
   illuminating at least one second radiation beam onto the weld or onto one of the components adjacent the weld;
   wherein at least one of the at least one first or second radiation beam is aimed onto the weld;
   receiving the reflections from the second radiation beam onto a detector; and,
   detecting the ultrasonic surface displacements at the weld from the reflection.
37. A pipeline according to clause 36, wherein the pipeline is obtained by a method further comprising adjusting the welding parameters as a function of the detected ultrasonic displacement at the weld.
38. The method according to clause 37, wherein said welding parameters include one or more from the group of welding torch forward speed, voltage, amperage, position of the welding torch relative to the components, speed of oscillation of the welding torch, amplitude of oscillation of the welding torch.
39. The method according to clause 37, wherein adjusting the welding parameters includes aborting the weld process in the case an unacceptable defect is detected
40. A method of inspecting a weld during welding of two components, the method comprising:
   illuminating a first radiation beam onto the weld to generate an ultrasonic surface displacement in the weld;
   illuminating a second radiation beam onto the weld;
   receiving the reflections from the second radiation beam onto a detector; and,
   detecting the ultrasonic surface displacements at the weld caused by the first radiation beam from the reflection of the second radiation beam on the detector.
41. The method according to clause 40, wherein the first radiation beam comprises multiple first radiation sub-beams or the second radiation beam comprises multiple second radiation sub-beams.
42. The method according to clauses 40 or 41, wherein the method comprises illuminating the second radiation beam on substantially the same location as the location of the first radiation beam on the weld and detecting an ultrasonic pulse echo reflection from the first beam with the second radiation beam for pulse-echo inspection.
43. The method according to any of clauses 40 to 42, wherein the method comprises illuminating the second radiation beam on a different location on the weld than the location of the first radiation beam on the weld and detecting an ultrasonic displacement with the second radiation beam for time of flight diffraction inspection.
44. The method according to any of clauses 40 to 43, wherein the first radiation beam provides a spot with a spot size larger then 150 micrometer, preferably larger than 300 micrometer on the weld suppressing Rayleigh waves.
45. The method according to any of clauses 40 to 44, wherein the method comprises shifting the first or second radiation beam to a different location on the weld to change from pulse echo detection inspection to time of flight diffraction inspection or vice versa.
46. The method according to any of clauses 40 to 45, wherein the first radiation beam is pulsed with a pulse duration between 1 femtosecond and 50 nanoseconds, preferably between 1 nanosecond and 20 nanoseconds, and more preferably around 6 nanoseconds creating ablative or thermo-elastic excitation of the weld for pulse-echo respectively time of detection.
47. The method according to any of clauses 40 to 46, wherein the method comprises
   moving a welding torch over an area between the two components;
   welding the two components together by providing a weld in between the two components; and,
   inspecting the weld by providing the first and second radiation beam on the weld.
48. The method according to clause 47 comprising providing multiple weld layers on top of each other between the components and inspecting each weld layer.
49. The method according to clause 8 comprising providing multiple weld layers on top of each other between the components and inspecting at least each second weld layer.
50. The method according to any of clauses 40 to 49, wherein the method comprises adjusting the welding parameters as a function of the detected ultrasonic displacement at the weld.
51. The method according to clause 50, wherein said welding parameters include one or more from the group of welding torch forward speed, voltage, amperage, position of the welding torch relative to the components, speed of oscillation of the welding torch, amplitude of oscillation of the welding torch.
52. The method according to clause 50, wherein adjusting the welding parameters includes aborting the weld process in case an unacceptable defect is detected.
53. The method according to any one of clauses 40 to 52, wherein the components are thick walled structures of pipe line sections.
54. Pipeline obtained by welding together thick walled structures of pipeline sections with a method according to clause 53.
55. An inspection apparatus for inspection of a weld, the apparatus comprising:
   a first illumination system to provide a first radiation beam to generate an ultrasonic surface displacement in a weld;
   a second illumination system to provide a second radiation beam at the weld; and,
   a detector for receiving the reflections from the second radiation beam and to detect the ultrasonic surface displacement at the weld, wherein the first and second illumination system provides the first and second radiation beam at the weld so as to detect the ultrasonic surface displacement of the material of the weld.
56. The inspection apparatus according to clause 55, wherein the first illumination system provides a spot with a spot size larger then 150 micrometer, preferably larger then 300 micrometer to suppress Rayleigh waves.
57. The inspection apparatus according to any of clauses 55 or 56, wherein the first illumination system provides a first radiation beam at substantially the same location on the weld as the second illumination system provides the second radiation beam for pulse-echo inspection.
58. The inspection apparatus according to any of clauses 55 to 57, wherein the first illumination system provides the first radiation beam at a different location on the weld as the second illumination system provides the second radiation beam for time of flight diffraction inspection.
59. The inspection apparatus according to any of clauses 55 to 58, wherein the apparatus is constructed and arranged to provide the first and second beam on substantially the same location for pulse echo inspection and on a different location for time of flight diffraction inspection.
60. The inspection apparatus according to clause 59, wherein the apparatus is provided with a beam shift mechanism for shifting the location of the first or second radiation beam on the weld to change from pulse echo detection inspection to time of flight diffraction inspection or vice versa.
61. The inspection apparatus according to any of clauses 55 to 60, wherein the first illumination system provides multiple first sub-radiation beams an/or the second illumination system provides multiple second sub-radiation beams .
62. The inspection apparatus according to any of clauses 55 to 61, wherein the detector comprises a first detector constructed and arranged for receiving reflections to be used for pulse echo inspection and a second detector constructed and arranged for receiving reflections for time of flight diffraction inspection.
63. The inspection apparatus according to any of clauses 55 to 61, wherein the first illumination system provides a short pulsed radiation beam with a pulse duration between 1 femtosecond and 50 nanoseconds, preferably between 1 nanosecond and 20 nanoseconds, and more preferably around 6 nanoseconds.
64. The inspection apparatus according to any of clauses 55 to 63, wherein the detector comprises a photo detector to detect the ultrasonic surface displacement at or near the target as a displacement of the reflection of the second radiation beam over the surface of the photo detector.
65. The inspection apparatus according to any of clauses 55 to 64, wherein the second illumination system provides a second radiation beam with a smaller spot size than the spot size of the first radiation beam provided by the first illumination system.
66. The inspection apparatus according to any of clauses 55 to 65, wherein the second illumination system provides the second radiation beam with a round spot.
67. The inspection apparatus according to any of clauses 55 to 66, wherein the first illumination system provides the first radiation beam with a spot with an elongated shape.
68. A welding apparatus for welding two components comprising:
   a welding torch,
   a first actuator for moving the welding torch and/or the components with respect to each other so as to allow the welding torch to form a weld in between the components; wherein the welding apparatus is provided with the inspection apparatus according to any of clauses 55 to 68 for inspecting the weld in between the components.
69. The welding apparatus according to clause 68, wherein the inspection apparatus is constructed and arranged within the welding apparatus to inspect one or more previous welding layers before the welding torch applies a subsequent welding layer.
70. The welding apparatus according to clause 68 or 69, wherein the inspection apparatus is constructed and arranged within the welding apparatus to inspect one or more previous welding layers when the temperature of this layer is cooled to between 100 and 500 degrees C, preferably around 300 degrees C.
71. The welding apparatus according to any of clauses 68 to 70, wherein the welding apparatus is provided with a second actuator for moving the inspection apparatus and the components with respect to each other so as to allow the inspection apparatus to inspect the weld in between the components.
72. The welding apparatus according to any of clauses 68 to 71, wherein the welding torch and the inspection apparatus are attached to each other and the first actuator for moving the welding torch also moves the inspection apparatus with respect to the components.
73. The welding apparatus according to any of clauses 68 to 72, wherein the inspection apparatus is operable connected to a welding controller controlling the welding apparatus.
74. The welding apparatus according to clause 73, wherein the welding controller is operable connected to the welding torch and the first actuator so as to control the position of the welding torch with respect to the components by providing an actuation signal to said first actuator and/or to provide one or more control signals for setting controllable welding parameters of said welding torch.
75. The welding apparatus according to clause 74, wherein the welding apparatus is constructed and arranged to provide multiple welding layers between the components and the inspection apparatus is constructed and arranged to inspect a previous layer while the welding torch is welding a subsequent layer.
76. A pipelay vessel comprising the inspection apparatus according to any one of clauses 55 to 67.
77. A pipelay vessel comprising the welding apparatus according to any one of clauses 68 to 75.
78. A pipeline obtained by a method of moving a welding torch between two pipe line sections;
   welding two pipeline sections together by providing a weld in between the two pipe line sections;
   illuminating a first radiation beam onto the weld to generate an ultrasonic surface displacement;
   illuminating a second radiation beam onto the weld ;
   wherein the first and second radiation beam is aimed onto the weld;
   receiving the reflections from the second radiation beam onto a detector; and, detecting the ultrasonic surface displacements at the weld caused by the first radiation beam from the reflection of the second radiation beam on the detector.
79. The pipeline according to clause 78, wherein the pipeline is obtained by a method further comprising adjusting the welding parameters as a function of the detected ultrasonic displacement at the weld said welding parameters including one or more from the group of welding torch forward speed, voltage, amperage, position of the welding torch relative to the components, speed of oscillation of the welding torch, amplitude of oscillation of the welding torch.
80. The pipeline according to clause 78, wherein the pipeline is obtained by a method further comprising adjusting the welding parameters as a function of the detected ultrasonic displacement at the weld and adjusting the welding parameters includes aborting the weld process in the case an unacceptable defect is detected.

For example, multiple welding torches may be provided to the apparatus. For example, the invention may take the form of a computer program containing one or more sequences of machine-readable instructions describing a method as disclosed above, or a data storage medium (e.g. semiconductor memory, magnetic or optical disk) having such a computer program stored therein. The sensor of the inspection apparatus may be provided with a data output connection to connect to a monitor system. The data output connection may, for example be a cable or wireless connection to provide the data collected with the sensor to the monitor or a computer system and to provide it on a monitor screen. The data output connection may also connect to a computer system for analyzing the data.

The descriptions above are intended to be illustrative, not limiting. Thus, it will be apparent to one skilled in the art that modifications may be made to the invention as described without departing from the scope of the claims set out below.

## Claims

1. A method of inspecting a weld during welding of two components, the method comprising:
illuminating a first radiation beam onto the weld to generate an ultrasonic surface displacement in the weld;
illuminating a second radiation beam onto the weld;
receiving the reflections from the second radiation beam onto a detector; and,
detecting the ultrasonic surface displacements at the weld caused by the first radiation beam from the reflection of the second radiation beam on the detector.

2. The method according to claim 1, wherein the first radiation beam comprises multiple first radiation sub-beams or the second radiation beam comprises multiple second radiation sub-beams.

3. The method according to claims 1 or 2, wherein the method comprises illuminating the second radiation beam on substantially the same location as the location of the first radiation beam on the weld and detecting an ultrasonic pulse echo reflection from the first beam with the second radiation beam for pulse-echo inspection.

4. The method according to any of claims 1 to 3, wherein the method comprises illuminating the second radiation beam on a different location on the weld than the location of the first radiation beam on the weld and detecting an ultrasonic displacement with the second radiation beam for time of flight diffraction inspection.

5. The method according to any of claims 1 to 4, wherein the first radiation beam provides a spot with a spot size larger then 150 micrometer, preferably larger than 300 micrometer on the weld suppressing Rayleigh waves.

6. The method according to any of claims 1 to 5, wherein the method comprises shifting the first or second radiation beam to a different location on the weld to change from pulse echo detection inspection to time of flight diffraction inspection or vice versa.

7. The method according to any of claims 1 to 6, wherein the first radiation beam is pulsed with a pulse duration between 1 femtosecond and 50 nanoseconds, preferably between 1 nanosecond and 20 nanoseconds, and more preferably around 6 nanoseconds creating ablative or thermo-elastic excitation of the weld for pulse-echo respectively time of detection.

8. The method according to any of claims 1 to 7, wherein the method comprises
moving a welding torch over an area between the two components;
welding the two components together by providing a weld in between the two components; and,
inspecting the weld by providing the first and second radiation beam on the weld.

9. The method according to claim 8 comprising providing multiple weld layers on top of each other between the components and inspecting each weld layer.

10. The method according to claim 8 comprising providing multiple weld layers on top of each other between the components and inspecting at least each second weld layer.

11. The method according to any of claims 1 to 10, wherein the method comprises adjusting the welding parameters as a function of the detected ultrasonic displacement at the weld.

12. An inspection apparatus for inspection of a weld, the apparatus comprising:
a first illumination system to provide a first radiation beam to generate an ultrasonic surface displacement in a weld;
a second illumination system to provide a second radiation beam at the weld; and,
a detector for receiving the reflections from the second radiation beam and to detect the ultrasonic surface displacement at the weld, wherein the first and second illumination system provides the first and second radiation beam at the weld so as to detect the ultrasonic surface displacement of the material of the weld.

13. A welding apparatus for welding two components comprising:
a welding torch,
a first actuator for moving the welding torch and/or the components with respect to each other so as to allow the welding torch to form a weld in between the components; wherein the welding apparatus is provided with the inspection apparatus according to claim 16 for inspecting the weld in between the components.

14. The welding apparatus according to claim 13, wherein the inspection apparatus is constructed and arranged within the welding apparatus to inspect one or more previous welding layers before the welding torch applies a subsequent welding layer.

15. A pipeline obtained by a method of moving a welding torch between two pipe line sections;
welding two pipeline sections together by providing a weld in between the two pipe line sections;
illuminating a first radiation beam onto the weld to generate an ultrasonic surface displacement;
illuminating a second radiation beam onto the weld ;
wherein the first and second radiation beam is aimed onto the weld;
receiving the reflections from the second radiation beam onto a detector; and, detecting the ultrasonic surface displacements at the weld caused by the first radiation beam from the reflection of the second radiation beam on the detector.
